# EUROPEAN PATENT APPLICATION

(11) **EP 4 472 149 A1**
(43) Date of publication of application: **04.12.2024**
(21) Application number: 24178440.4
(22) Date of filing: 28.05.2024
(51) Int. Cl.: H04L 12/413, H04L 12/28

(54) **HOME AUTOMATION SYSTEM**

(30) Priority: 29.05.2023 IT 202300010863
(71) Applicant: Vimar S.p.A., 36063 Marostica (VI) (IT)
(72) Inventor: BALASSO, Lucio, 36016 THIENE (VI) (IT)
(74) Representative: Prendin, Marco

(57) **Abstract**

Home automation system (100) comprising a frame (1) configured to be fixed to a wall or inside an electrical panel, a plurality of electronic modules (2a, 2b, 2c) connected to the frame and configured to transmit data messages via a transmission medium (3), the transmission medium being configured to carry out the transmission of data messages between the electronic modules of the plurality of electronic modules. Each electronic module of the plurality of electronic modules is a master node comprising a processing unit (4) configured to transmit at least one of the data messages to at least one other electronic module of the plurality of electronic modules when a predetermined event occurs in the electronic module of the processing unit (4) and if the transmission medium is free for the processing unit.

## Description

### Technical scope

The present invention relates to a home automation system.

### Technological background

The invention finds particular, though not exclusive, application in the technical field related to home automation.

Home automation systems generally comprise a plurality of electronic devices such as switches, actuators, detectors or controllers, configured to communicate with each other via a shared communication channel.

The Applicant has noted that the current home automation systems require a relatively complex configuration of electronic devices in order for them to communicate properly with each other.

Consequently, the intervention of a specialised technician is required not only for the installation of the home automation system but also for the addition or replacement of one or more electronic devices for the correct configuration of the latter and of the overall system.

The Applicant therefore understood the need to offer communication systems which are relatively simple in terms of configuration with the first installation and/or in subsequent system modifications.

The Applicant has also noted that several electronic devices may be installed in the same wall-mounted support and may need to exchange information with each other via a data transmission element. The support is typically small.

The Applicant therefore understood the need to keep the footprint of the data transmission element relatively small.

US 2020/274813 A1 refers to a network interface for a home automation appliance, a home automation system for a building containing the home automation appliance and a building comprising such a home automation system.

EP 3059813 A1 refers to home electrical connection systems and, more specifically, to a smart home electrical connection system.

US 2004/160976 A1 refers to a home network system and, more specifically, to a communication appliance and a method for supporting multiple access via carrier detection with collision detection of peripheral devices connected to a home bus in the home network.

The problem underlying the present invention is that of providing a home automation system which is structurally and functionally conceived to at least partially obviate one or more of the drawbacks referred to with reference to the mentioned prior art.

In the context of such a problem, an aim of the present invention is to provide a simplified home automation system in terms of configuration.

A further aim of the present invention is to provide a home automation system comprising a plurality of electronic modules configured to communicate data with each other, where the addition of a new electronic module to the system and/or the removal and/or replacement of one or more electronic modules already present in the system does not require the reconfiguration of the system and/or the electronic modules already present in the system.

A further aim of the present invention is to provide a home automation system comprising a plurality of electronic modules configured to communicate data with each other, where the addition of a new electronic module to the system does not require the new electronic module to be configured to communicate with other electronic modules already in the system.

A further aim of the present invention is to provide a home automation system of limited footprint.

A further aim of the present invention is to provide a home automation system comprising a plurality of electronic modules with relatively low computing power and/or characterised by relatively limited power consumption.

A further aim of the present invention is to provide a home automation system comprising a plurality of electronic modules with a relatively limited implementation cost.

This problem is solved and at least one of these aims is at least partially achieved by the invention by means of a home automation system according to one or more of the appended claims.

In the present disclosure as well as in the herein enclosed claims, certain terms and expressions are deemed to have, unless otherwise expressly indicated, the meaning expressed in the following definitions.

The term 'DIN rail' refers to a standard metal rail manufactured according to the standard IEC/EN 60715.

The term 'master node' refers to a node in a data communication system which is configured to transmit data via a transmission medium without having received authorisation from another node in the system.

### Summary of the invention

In a first aspect thereof, the present invention relates to a home automation system, hereinafter also referred to as 'system' for brevity.

The system comprises a frame.

The frame is configured to be fixed to a wall (preferably by means of a tapping box installed in the wall) or inside an electrical panel.

As will be better clarified below, the frame preferably comprises a plate which can be fixed to a tapping box installed in a wall or preferably corresponds to a DIN rail extended inside an electrical panel.

The system further comprises a plurality of electronic modules connected (preferably removably) to the frame and configured to transmit data messages via a transmission medium.

Furthermore, the system comprises the transmission medium configured to carry out the transmission of data messages between the electronic modules of the plurality of electronic modules.

Each electronic module of the plurality of electronic modules is a master node comprising a processing unit configured to transmit at least one of said data messages to at least one other electronic module of the plurality of electronic modules when a predetermined event occurs in the electronic module of said processing unit and if the transmission medium is free for such a processing unit.

The transmission medium is free for the processing unit if the transmission medium is not already occupied by a data transmission in progress to that processing unit, in particular in the instant of transmission start by said processing unit.

Therefore, the home automation system according to the invention corresponds to a multi-master data communication system, i.e., each electronic module is a master node of the home automation system.

The home automation system therefore does not require the presence of a specific controller node which manages and/or authorises the transmission of data messages between the system nodes.

Accordingly, the addition and/or replacement of one or more electronic modules in the home automation system according to the invention does not necessarily require the configuration/reconfiguration of any of said electronic modules by a skilled technician.

The result is a simplified home automation system.

In a second aspect thereof, the present invention relates to an electrical module of the aforesaid home automation system, where the latter further comprises a connection device comprising at least one attachment element and at least one attachment receiving element for connecting (preferably integrally) the electronic modules to the frame. The electronic module and the frame comprise one the at least one attachment element and the other the at least one attachment receiving element.

Preferably, the attachment element is a hook while the attachment receiving element is configured to be hooked by the hook.

Preferably, the attachment element is a protruding portion from one between the electronic module and the frame while the attachment receiving element is a recess in the other between the electronic module and the frame and is shaped to receive the protruding portion so as to obtain an integral connection between such elements.

Adding and/or replacing the electronic module in the home automation system is thus simplified.

In at least one of the above aspects, the present invention may also have at least one of the preferred features set out hereinafter.

Preferably, the predetermined event occurring in an electronic form corresponds to at least one of:
- reception of a data signal, said data signal having been sent by an electronic device operatively connected to such an electronic module via said transmission medium or via a different communication bus,
- reception of a data message from another electrical module,
- generation of a signal indicative of a user interaction with an input interface of such an electronic module,
- detection of a physical quantity by means of a sensor of such an electronic module, the detection being able to be automatic and at predetermined intervals,
- detection of objects (things or living beings) in an area surrounding or immediately near such an electronic module by means of a sensor of the latter, and
- generation of a predetermined asynchronous signal (e.g., a reset signal, a signal indicating the end of a timer or, more generally, an interrupt signal).

Preferably, the home automation system according to the invention is configured to manage the automation of systems of a building. In particular, the home automation system according to the invention is intended to be used in homes and/or offices and/or shops.

Preferably, the wall to which the frame can be fixed can correspond to a wall (e.g., a wall or panel) of a building which preferably delimits a room. In at least one embodiment of the present invention, at least one of said electronic modules, preferably each electronic module of the plurality of electronic modules, comprises at least one of:
- an input interface configured to acquire a command from a user and/or a data signal sent by an electronic device operationally connected to such an electronic module via an additional communication bus,
- a sensor configured to detect a physical quantity, and
- a sensor configured to detect objects in a surrounding area or immediately near such an electronic module.

In at least one embodiment of the present invention, the input interface of an electronic module comprises at least one of a button, a key, a knob, a lever, a display (in particular a touch display), a camera (e.g., for acquiring gesture commands) and a microphone for acquiring voice commands.

In at least one embodiment of the present invention, the sensor for detecting a physical quantity of an electronic module comprises at least one of a light detector, a temperature detector, a humidity detector, a brightness detector and an air quality sensor (e.g., a VOC sensor or a gas sensor).

In at least one embodiment of the present invention, the sensor for detecting objects in a surrounding area or immediately near an electronic module comprises at least one of a presence detector and a proximity detector.

In at least one embodiment of the present invention, the frame comprises a plate.

In at least one embodiment of the present invention, the home automation system comprises the aforesaid connection device for connecting the electronic modules to the frame, in particular to the plate.

Preferably, the frame comprises a front surface and a rear surface opposite the front surface. The rear surface is the surface of the frame intended to be facing the wall to which the frame is fixed.

Preferably, the frame comprises at least one hole (preferably a pair of holes) for the passage of a related screw so as to fix the frame to the wall, preferably by means of a tapping box installed in the wall.

In at least one embodiment of the present invention, the frame comprises a support provided with a plurality of seats for accommodating respective actuators when these are connected, in particular hooked, to the frame. Preferably, the actuators are devices configured to intervene in the operation and/or control of mechanisms or systems of a building, such as rolling shutters or lighting devices.

By way of example, the actuator can correspond to a relay actuator for controlling lights or rolling shutters, or a dimmer for controlling the light intensity.

Preferably, at least one electronic module can be operationally connected to an actuator by means of the frame.

In detail, the frame can be provided with an additional communication bus common to both at least one electronic module and to one actuator so that such an electronic module can control the actuator via the transmission of a control signal in the additional communication bus.

Preferably, the control signal is generated by the electronic module following the acquisition of a command via the input interface and/or the detection of a physical quantity and/or objects via the corresponding sensor or, more in general, when a predetermined event occurs in such an electronic module.

Preferably, the actuators are connected to the frame on the side opposite the electronic modules.

In at least one embodiment of the present invention, the home automation system comprises at least one auxiliary device in addition to the electronic modules, the auxiliary device being arranged to be connected, in particular hooked, to the frame.

Preferably, the support is provided with at least one further seat arranged to accommodate the auxiliary device.

Preferably, the at least one auxiliary device is connected to the frame on the side opposite the electronic modules.

Preferably, the auxiliary device corresponds to a power source. Preferably, the power source is configured to supply electricity to the electronic modules.

In at least one embodiment of the present invention, the auxiliary device is configured to receive and/or transmit data signals via an additional communication bus of the frame.

In at least one embodiment of the present invention, the home automation system comprises a power supply line for energising the plurality of electronic modules.

Preferably, the frame is provided with the transmission medium and/or power supply line.

Preferably, the transmission medium comprises a conductive track or a conductive cable for the transmission of data messages between the electronic modules.

Preferably, the data messages are electrical signals.

Preferably, the power supply line comprises a pair of conductive tracks or conductive cables for the transmission of electricity to the electronic modules.

Preferably, the electronic modules comprise respective electrical contacts. Each electrical contact is arranged so as to come into contact with the power supply line when the related electronic module is connected to the frame. Preferably, the electronic module comprises a rear face facing the frame when the electronic module is connected to the latter and a front face opposite the rear face. The electrical contacts are preferably provided on the rear faces of the respective electronic modules.

Preferably, the at least one auxiliary device, in particular the power source, comprises electrical contacts arranged so as to come into contact with the power supply line when the at least one auxiliary device is connected to the frame.

Preferably, the at least one auxiliary device comprises a front face facing the frame when the at least one auxiliary device is connected to the latter and a rear face opposite the front face. The electrical contacts are preferably provided on the front face of the at least one auxiliary device.

In at least one embodiment of the present invention, the electronic modules comprise respective terminals for transmitting data messages. Preferably, the terminal is an electrical contact.

In particular, each electronic module of the aforesaid plurality of electronic modules comprises at least one terminal (preferably a single terminal) for transmitting data messages.

Preferably, each terminal is arranged so as to come into contact with the transmission medium when the related electronic module is connected to the frame, in particular to the plate.

The terminals are preferably provided on the rear faces of the respective electronic modules.

Alternatively, the terminals are preferably arranged so that the terminal of a first electronic module comes into contact with the terminal of a second electronic module when the first electronic module and the second electronic module are side by side and connected to the frame, the union of such terminals forming the transmission medium.

In this case, the frame is preferably a DIN rail and the electronic modules comprise two terminals, preferably one provided on a first side face and the other on a second side face opposite the first side face of the respective electronic module.

Preferably, the electronic modules are configured to transmit and preferably receive data messages to/from the transmission medium via the respective terminal(s).

In at least one embodiment of the present invention, the transmission medium comprises a single conductive line for the transmission of data messages between the electronic modules. In other words, in this case the transmission medium is of the single-wire type.

Preferably, the aforesaid conductive line corresponds to a conductive track or a conductive cable.

The provision of a single conductive line for the transmission of data messages between the electronic modules allows to significantly reduce the footprint of the transmission medium.

Furthermore, this allows to reduce the cost of making the home automation system.

In at least one embodiment of the present invention, the processing unit is configured to determine whether the transmission medium is free. Preferably, the processing unit is configured to access the transmission medium when the transmission medium is free.

Preferably, the processing unit is configured to transmit at least one data message when it has accessed the transmission medium.

Therefore, the home automation system does not require the presence of a specific controller node to manage access to the transmission medium, but such access is delegated to each electronic module of the system.

In at least one embodiment of the present invention, the home automation system is configured for two-way data communication, preferably in half-duplex mode.

Preferably, the processing unit is configured for two-way data communication, in particular in half-duplex mode.

In this case, the transmission medium (in particular the single-wire type transmission medium) is such as to allow a two-way data communication between the electronic modules, particularly in half-duplex mode.

This allows any electronic module to both transmit data messages (if the transmission medium is free) and to receive them.

In at least one embodiment of the present invention, the processing unit is configured to transmit data messages in serial and/or asynchronous mode, preferably in asynchronous serial mode

This allows to use a peripheral generally common to the known microcontrollers and to minimise the communication lines (single-wire type transmission medium).

In at least one embodiment of the present invention, the processing unit is configured to transmit data messages in broadcast mode.

Therefore, the data message transmitted by the processing unit of an electronic module is received by all the remaining electronic modules in the home automation system.

This aspect allows to avoid assigning a specific address to each electronic module of the home automation system, thus simplifying the configuration thereof.

However, it is not excluded that at least one or all master nodes of the home automation system according to the invention can have their own address. Preferably, the processing unit is configured to transmit the data messages as binary signals, especially with NRZ (Non Return to Zero) line coding.

In at least one embodiment of the present invention, the processing unit is configured to detect data message collisions in the transmission medium.

In at least one embodiment of the present invention, the processing unit is configured to transmit a data message identifying a detected collision to at least one other electronic module if the processing unit detects a data message collision in the transmission medium.

In at least one embodiment of the present invention, the processing unit implements a multiple access protocol to the transmission medium with data message collision detection.

This provision allows an electronic module, in particular each master node of the home automation system, to access the transmission medium if it is free and to detect any data message collisions in the transmission medium. If a data message collision is detected by a processing unit, it will then transmit a data message identifying a detected collision to at least one other electronic module (in particular to all the electronic modules) of the home automation system.

In at least one embodiment of the present invention, the processing unit of an electronic module comprises one or both of the following memories:
- a receiving memory arranged to store a data message received from the transmission medium, and
- a transmission memory arranged to store a data message transmitted to the transmission medium.

In at least one embodiment of the present invention, the receiving memory is a receiving buffer arranged to store the data received from the processing unit, preferably to decode such data.

In at least one embodiment of the present invention, the transmission memory is a transmission buffer arranged to store data, preferably encoded to carry out their transmission.

In at least one embodiment of the present invention, the processing unit comprises a first data port arranged to receive data messages from the transmission medium and connected to the receiving memory, and a second data port arranged to transmit data messages to the transmission medium and connected to the transmission memory. The first data port and the second data port are preferably comprised in the terminal of the related electronic module.

Preferably, the first data port and/or the second port are configured as open-drain, more preferably with an external or internal pull-up. Preferably, the first data port and/or the second data port are configured in high impedance when the respective electronic module is not transmitting data messages.

As an alternative to the first data port and the second data port, the processing unit comprises a data port arranged to both transmit and receive data messages to/from the transmission medium and connected to both the transmission memory and the receiving memory. The data port is preferably comprised in the terminal of the related electronic module.

Preferably, the data port is configured as open-drain, more preferably with an external or internal pull-up.

Preferably, the data port is configured in high impedance when the related electronic module is not transmitting data messages.

In at least one embodiment of the present invention, the processing unit is configured to transmit data messages comprising a dominant bit, the dominant bit having a low logic level.

This aspect allows to detect a collision when the transmission of a high logical level is overwritten by a low logical level.

In at least one embodiment of the present invention, the processing unit is configured to determine whether the transmission medium is free based on the content of the receiving memory.

Preferably, the processing unit is configured to determine that the transmission medium is free if the receiving memory is free, i.e., does not contain any data messages (overall or a part thereof), while the processing unit is configured to determine that the transmission medium is busy (i.e., is not free) if the receiving memory contains at least one data message (overall or a part thereof).

In at least one embodiment of the present invention, at least one electronic module, in particular each electronic module, is configured to transmit a data message and to receive it from the transmission medium.

In this case, the data message contained in the transmission memory of an electronic module and transmitted by the latter to the transmission medium is received by the electronic module itself and stored in its receiving memory.

In at least one embodiment of the present invention, the processing unit is configured to detect a collision of data messages based on a comparison between the receiving memory and the transmission memory, preferably to detect an immediate collision during the transmission of data messages based on a comparison between the transmission memory and the receiving memory.

Preferably, the processing unit is configured to establish a data message collision has occurred if the content of the transmission memory differs from those of the receiving memory.

A data communication problem occurring in the transmission medium during the transfer of a data message thus results in a difference between the data message sent by an electronic module and that received by it, such a difference being identified by such an electronic module as a data message collision in the transmission medium.

In at least one embodiment of the present invention, the processing unit comprises a communication interface configured to transmit and receive data messages.

Preferably, the communication interface is a universal asynchronous receiver-transmitter, UART, or a universal asynchronous and synchronous receiver-transmitter, USART, preferably configured as UART.

Such a provision allows to use a peripheral generally common to all known microcontrollers, to develop facilitated control firmware (drivers), as well as to use asynchronous single-wire type communication.

The aforesaid communication interface also allows the use of processing units having relatively low computing power and/or relatively limited power consumption.

Preferably, the processing unit comprises and in particular corresponds to a microcontroller provided with the UART or USART communication interface.

An example of a microcontroller is the device called STM32G070 or STM32G0B0 produced by STMicroelectronics NV.

The UART, or USART, comprises at least one of the following components:
- a data input port (also called RX): port for receiving data,
- a data output port (also called TX): port for transmitting data,
- a receiving register (also called RX register): when receiving data, the received bits are shifted from the data input port (RX) to this register,
- a transmission register (also called TX register): when transmitting data, the bits to be transmitted are moved from this register to the data output port (TX),
- an input line (called RX line) connected to the data input port and the receiving memory and/or receiving register: line for receiving data,
- an output line (called TX line) connected to the data output port and the transmission memory and/or transmission register: data transmission line,
- a Busy Flag field: a field of one or more bits, preferably one bit. The status of such a field is set and reset by the processing unit. In particular, such a field has an 'active' state (e.g., it has a high logical state, in particular it is equal to 1) when a communication on the input line is in progress, while it has an 'inactive' state (e.g., it has a low logical state, in particular it is equal to 0) when reception is completed. Specifically, the Busy Flag field is a bit related to the aforesaid receiving register (RX register) and its logical state indicates if the reception of data is underway.

Preferably, the data port of the terminal of an electronic module corresponds to the data output port of the related UART (or USART). In this case, the input line of the UART (or USART) is connected to its output line. In at least one embodiment of the present invention, the communication interface comprises the Busy Flag field, the processing unit being configured to determine whether the transmission medium is free based on the contents of the Busy Flag field and/or based on the contents of the receiving memory.

In this case, the receiving memory preferably corresponds to the receiving register of the UART (or USART) and/or the receiving buffer of the processing unit.

Preferably, the processing unit is configured to determine that the transmission medium is free if the Busy Flag field is reset, in particular if it has a low logical state, while the processing unit is configured to determine that the transmission medium is busy (i.e., not free) if the Busy Flag field is set, particularly if it has a high logical state.

In at least one embodiment of the present invention, the processing unit is configured to detect a data message collision based on a comparison between the receiving memory and the transmission memory and/or if the communication interface detects a Framing Error.

In this case, the receiving memory preferably corresponds to the receiving register of the UART (or USART) and the transmission memory preferably corresponds to the transmission register of the UART (or USART). Preferably, the communication interface detects a Framing Error if it receives a data message containing a predetermined character, in particular if the UART (or USART) receives a predetermined character via the data input port.

Preferably, the predetermined character corresponds to an interruption character, also known as Break character.

The Framing Error will not be detailed further below, as it is a known error type in common UARTs (or USARTs).

In at least one embodiment of the present invention, the processing unit of an electronic module is configured to transmit a jamming signal to (all) the other electronic modules when it detects a data message collision, informing them that a collision has been detected.

Preferably, the jamming signal contains said predetermined character, in particular the Break character, adapted to create a Framing Error in the communication interface receiving such a signal.

In at least one embodiment of the present invention, the processing unit of an electronic module is configured to transmit one or more data messages after having waited an initial predetermined time period, also called Packet Gap (IPG) or Inter Frame Spacing (IFS), from when it determined that the transmission medium is free, thus preferably starting from the last data received.

Therefore, following the determination that the transmission medium is free, the processing unit waits the first predetermined time period before transmitting the data message.

Preferably, the first predetermined time period corresponds to a timeout whose value allows the electronic module to consider the reception of a data message as completed.

The first predetermined time period is preferably greater than, or equal to, 50 ms, more preferably greater than, or equal to, 80 ms.

Such a provision ensures that a data message transmitted by a first electronic module is completely received by a second electronic module, in particular by all the other electronic modules, of the data communication system.

In at least one embodiment of the present invention, the processing unit is configured to transmit one or more data messages, in particular to retransmit a data message subject to a collision, after having waited a second predetermined time period, also called Back Off Time, from when it detects a data message collision.

Therefore, following the detection of a data message collision, the processing unit waits the second predetermined time period before transmitting the data message, in particular before re-transmitting the data message subject to collision.

Preferably, the value of the second predetermined time period is a random number which allows to avoid a (new) simultaneous transmission.

More preferably, the second predetermined time period is comprised between 0 ms and 600 ms.

Preferably, the second predetermined time period is equal to k times a TimeSlot, where k is a random value comprised in the interval [0, (2^n)-1], TimeSlot is equal to 9 ms and n represents the number of collisions which have occurred since an initial time (n is preferably comprised between 1 and 6).

In at least one embodiment of the present invention, the home automation system implements (at least) the levels 1 (Physical Level), 2 (Connection Level) and 7 (Application Level) of the ISO/OSI model.

In at least one embodiment of the present invention, the data message transmitted by an electronic module comprises a data unit, also called frame. The frame comprises a header field and a message field. Preferably, the header field comprises two preamble fields, more preferably of value 0xAA, and an SOF (Start Of Frame) field, more preferably of value 0xAB.

Preferably, the message field comprises a DST field whose value represents the address of the destination node, an SRC field whose value represents the address of the source node, and an LEN field whose value represents the number of bytes of the frame following the LEN field.

Preferably, the DST field has the value 0xFF if the address is not defined, 0x00 if the data message is sent to all the electronic modules (broadcast transmission) or a value comprised between 0x01 and 0xFE representing the address of a specific node in the home automation system. Preferably, the message field further comprises a TYPE field whose value represents the type of data transmitted, and a plurality of DATA fields (DATA_0, DATA_1, ..., DATA_n) comprising the information to be transmitted.

Preferably, the message field also comprises a CKS field whose value represents the checksum of the DST, SRC, LEN, TYPE fields and the DATA_0 - DATA_n fields.

### Brief description of the drawings

The characteristics and advantages of the present invention will best result from the detailed description of preferred embodiments thereof, illustrated by way of non-limiting example with reference to the accompanying drawings, in which:
- figure 1 is a schematic depiction of a home automation system according to an embodiment of the invention,
- figures 2 and 3 are perspective views according to different angles of the home automation system of figure 1,
- figure 4 is a rear view of electronic modules of the home automation system of figure 2,

- figures 5 and 6 are front and rear views of a frame of the home automation system of figure 2,
- figure 7 shows a pair of actuators and a power source of the home automation system of figure 2,
- and figure 8 is a schematic depiction of a processing unit comprising a communication interface of the home automation system of figure 1, and
- figure 9 shows a frame of the home automation system of figure 1.

### Description of embodiments of the invention

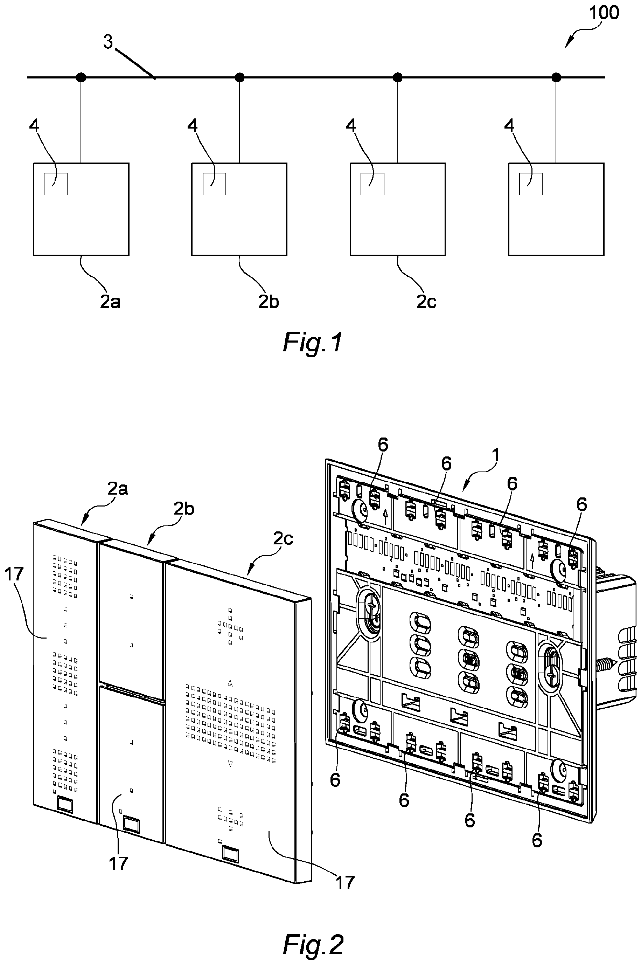

With reference to the enclosed figures, 100 overall indicates a home automation system according to an embodiment of the invention. Referring to figures 1-3, the system 100 comprises a frame 1 configured to be fixed to a wall or inside an electrical panel, a plurality of electronic modules 2a, 2b, 2c and a transmission medium 3 for transmitting data messages. The electronic modules 2a, 2b, 2c are configured to be connected to the frame 1 and to transmit data messages via the transmission medium 3.

With particular reference to figure 1, each electronic module 2a, 2b, 2c is a master node comprising a processing unit 4 configured to transmit at least one data message to at least one other electronic module 2a, 2b, 2c when a predetermined event occurs in the electronic module of such a processing unit 4 and if the transmission medium 3 is free for the processing unit.

A multi-master communication home automation system is thus obtained. By way of example, the electronic modules 2a, 2b, 2c can comprise a proximity detector, an input interface such as a button and, respectively, a brightness detector.

With particular reference to figures 2-4, the electronic modules 2a, 2b, 2c comprise a plurality of attachment elements, i.e., hooks, 5 while the frame 1 comprises a plate 1a provided with a plurality of attachment receiving elements, i.e., hook receiving elements, 6. The plurality of hooks 5 and the hook receiving elements 6 form a hooking device for fixing the electronic modules 2a, 2b, 2c to the frame 1.

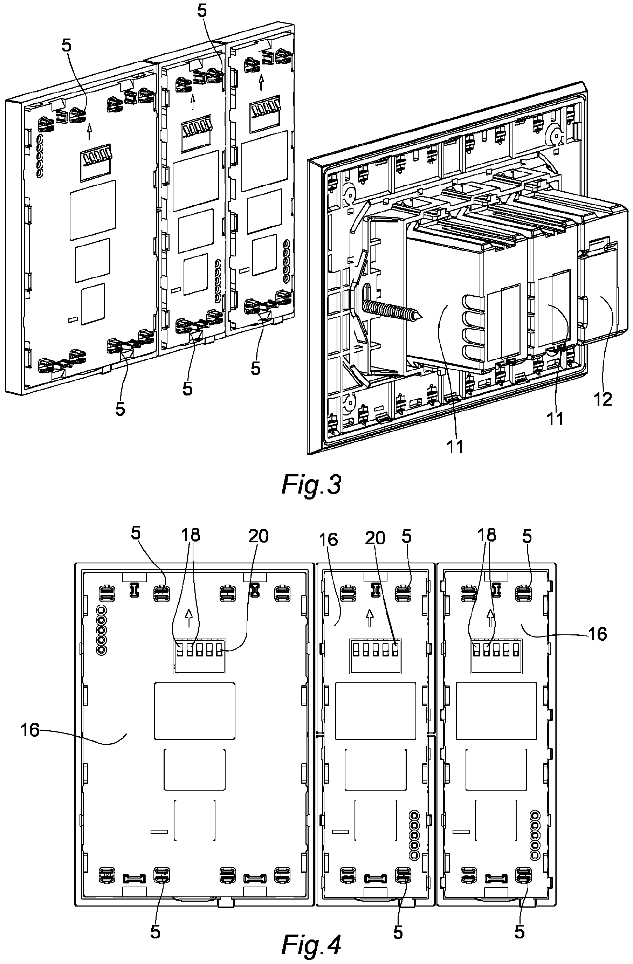

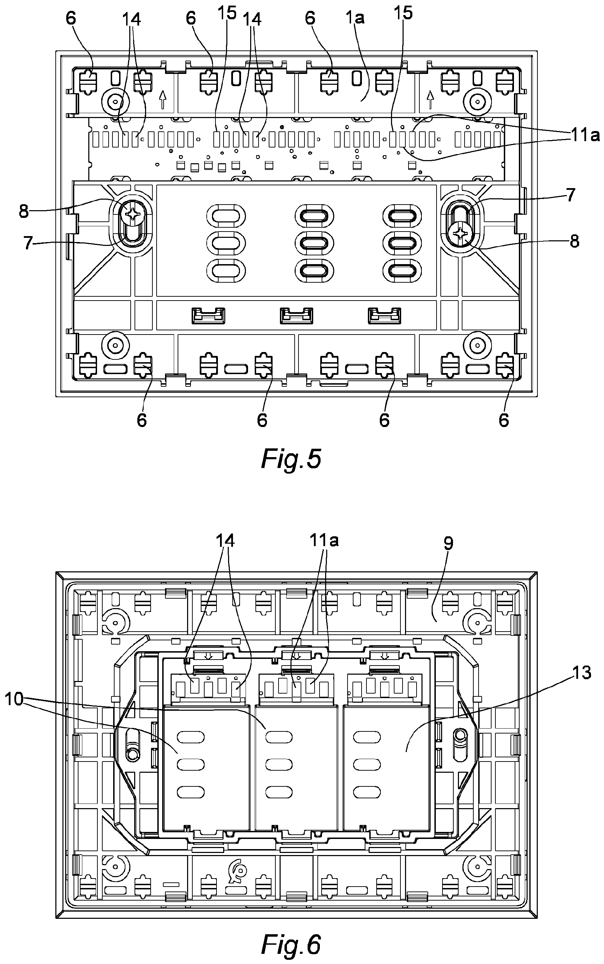

The frame further comprises a pair of holes 7 for the passage of screws 8 for fixing the frame 1 to the wall by means of a tapping box present therein. With particular reference to figure 3, the frame 1 comprises a support 9, illustrated in figure 6, provided with a plurality of seats 10 for accommodating respective actuators 11 on the side opposite the electronic modules 2a, 2b, 2c. In detail, the actuators 11 can be hooked to frame 1 and operatively connected to the electronic modules via an additional communication bus 11a of the frame 1.

The home automation system 100 further comprises an auxiliary device 12 arranged to be hooked to the frame 1.

In particular, the support 9 is provided with a seat 13 arranged to accommodate the auxiliary device 12.

The auxiliary device 12 is preferably a power source configured to supply electricity to the electronic modules 2a, 2b, 2c. Furthermore, the auxiliary device 12 is configured to transmit and receive data signals via the additional communication bus 11a.

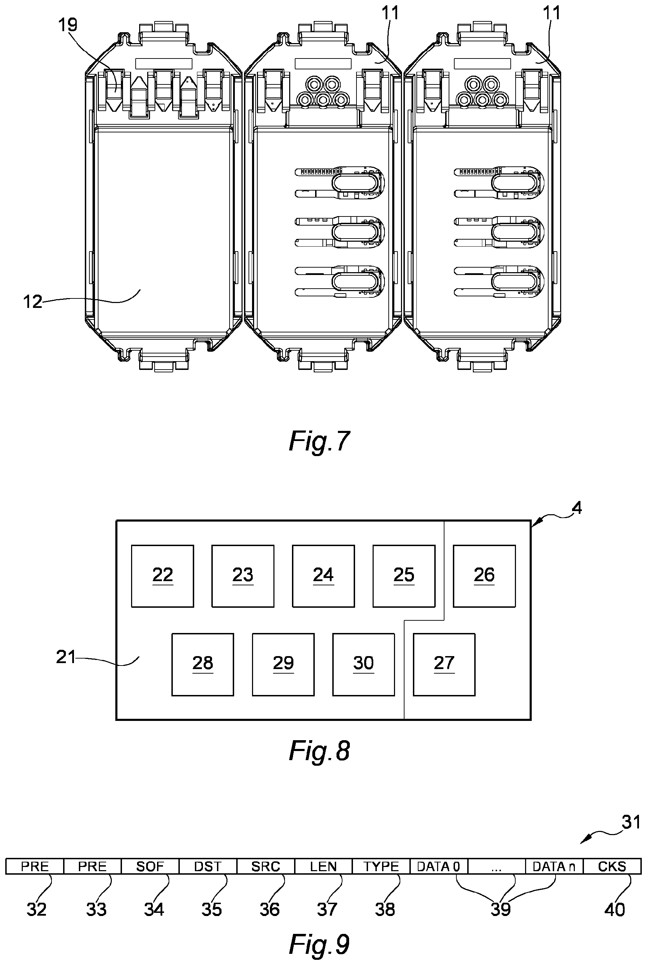

Figure 7 shows examples of actuators 11 and a power source 12 side by side.

The home automation system 100 further comprises a power supply line 14 for energising the plurality of electronic modules 2a, 2b, 2c.

In detail, the frame 1 is provided with both the transmission medium 3 and the power supply line 14, where the transmission medium comprises a single conductive line 15 made in the form of an electrically conductive track, for transmitting data messages between the electronic modules 2a, 2b, 2c and the power supply line comprises a pair of electrically conductive tracks for transmitting electricity to the electronic modules 2a, 2b, 2c.

In other words, the transmission medium 3 is of the single-wire type.

With particular reference to figures 2-4, each electronic module 2a, 2b, 2c comprises a rear face 16 facing the frame 1 when the electronic module 2a, 2b, 2c is connected to the latter and a front face 17 opposite the rear face 16.

The rear faces 16 comprise electrical contacts 18, arranged so as to come into contact with the power supply line 14 when the respective electronic modules 2a, 2b, 2c are connected to the frame 1.

Electrical contacts 19 are also provided on a front face of the power source 12 facing the frame 1 when the power source 12 is connected to the latter. The electrical contacts 19 are arranged so that they come into contact with power supply line 14 when the power source 12 is connected to the frame 1.

The electrical contacts 19 are visible in figure 7.

With particular reference to figures 3 and 4, the electronic modules 2a, 2b, 2c comprise respective terminals 20 for transmitting data messages.

In detail, each of the electronic modules 2a, 2b, 2c is provided with a single terminal 20 since the transmission medium 3 is of the single-wire type.

The terminals 20 are arranged at the rear faces 16 of the respective electronic modules 2a, 2b, 2c and so that they come into contact with the transmission medium 3, i.e., the conductive line 15, when the electronic modules 2a, 2b, 2c are connected to the frame 1.

With particular reference to the functional characteristics of the system 100, the processing unit 4 of each electronic module 2a, 2b, 2c is configured to determine whether the transmission medium 3 is free, to access the transmission medium 3 when it is free and to transmit at least one data message when it has accessed the transmission medium 3.

Furthermore, the home automation system 100 is configured for two-way data communication, where the processing unit 4 of each electronic module 2a, 2b, 2c is configured for data communication in half-duplex mode. Therefore, any electronic module 2a, 2b, 2c can both transmit and receive data messages.

It is further envisaged that the data messages are transmitted from the processing units 4 in asynchronous serial mode when a predetermined event occurs in the respective electronic module 2a, 2b, 2c, e.g., when the button on electronic module 2b is pressed.

The processing units 4 are preferably configured to transmit data messages in broadcast mode.

The processing units 4 of each electronic module 2a, 2b, 2c are also configured to detect data message collisions in the transmission medium 3. In detail, each processing unit 4 is configured to transmit a data message identifying a detected collision to at least one other electronic module if the processing unit 4 detects a data message collision in the transmission medium 3.

A multiple access protocol to the transmission medium with data message collision detection is therefore implemented by the processing units 4.

In a preferred embodiment of the invention, the processing units 4 comprise respective communication interfaces 21 configured to transmit and receive data messages, each communication interface 21 being either a universal asynchronous receiver-transmitter (UART) or a universal synchronous and asynchronous receiver-transmitter (USART).

With particular reference to figure 8, the communication interface 21 comprises an input line 28 connected to a data input port 22, the latter being connected to a receiving register 24 which is connected to a receiving memory (buffer) 26 of the processing unit 4. Furthermore, the communication interface 21 comprises an output line 29 connected to a data output port 23, the latter being connected to a transmission register 25 which is connected to a transmission memory (buffer) 27 of the processing unit 4.

The communication interface 21 further comprises a Busy Flag field 30. The data output port 23 and the data input port 22 coincide and belong to the same terminal 20 since the transmission medium 3 is of the single-wire type.

Therefore, the terminal 20 of each electronic module is arranged to both receive and transmit data messages from/to the transmission medium 3. Preferably, the data output port 23 is configured as open-drain with an external pull-up as well as in high impedance when the related electronic module 2a, 2b, 2c is not transmitting data messages.

The above-mentioned characteristics allow the processing unit 4 to be configured to determine whether the transmission medium 3 is free based on the content of the Busy Flag field 30: the transmission medium 3 is free if the Busy Flag field has a low logical state while transmission medium 3 is busy if the Busy Flag field has a high logical state.

In addition, the processing unit 4 is configured to determine whether the transmission medium 3 is free based on the contents of a receiving memory, the latter being the receiving register 24 or the receiving buffer 26 of the communication interface 21. In detail, the transmission medium 3 is free if the receiving memory contains no data message, while the transmission medium 3 is busy if the receiving memory contains at least one data message.

The processing unit 4 is further configured to detect a data message collision based on a comparison between the transmission register 25 and the receiving register 24 of the communication interface 21. In detail, a data message collision is detected by the processing unit 4 if the content of the related transmission register 25 differs from that of its receiving register 24.

In addition, the processing unit 4 is configured to detect a data message collision if the communication interface 21 detects a Framing Error. The communication interface 21 detects a framing error if it receives a predetermined character via the data input port 22.

Preferably, the predetermined character corresponds to an interruption character, also called Break character, which is transmitted by an electronic module 2a to the other electronic modules 2b, 2c of the system 100 when it detects a data message collision.

The processing units 4 of the electronic modules 2a, 2b, 2c are further configured to transmit one or more data messages after having waited a first predetermined time period (Packet Gap or Inter Frame Spacing) from when they determined that the transmission medium 3 is free, as well as to retransmit a data message subject to a collision after having waited a second predetermined time period (Back Off Time) from when they detect a data message collision.

Preferably, the first predetermined time period is greater than 80 ms while the second predetermined time period is comprised between 0 ms and 600 ms.

With particular reference to figure 9, the data messages transmitted by the electronic modules comprise a frame 31.

The frame 31 comprises a pair of preamble fields 32, 33, an SOF field 34, a DST field 35, an SRC field 36, an LEN field 37, a TYPE field 38, n DATA fields 39 and a CKS field 40. The preamble fields 32, 33 and the SOF field 34 form the header field of the frame 31 while the DST 35, SRC 36, LEN 37, TYPE 38, DATA 39 and CKS 40 fields form the message field of the frame 31.

Preferably, the preamble fields have a value equal to 0xAA and the SOF field has a value equal to 0xAB.

The technical problem underlying the present invention is thus solved, while at the same time achieving a number of advantages. In particular, the home automation system is particularly simple in terms of configuration.

## Claims

1. Home automation system (100) comprising:
• a frame (1) configured to be fixed to a wall or inside an electrical panel,
• a plurality of electronic modules (2a, 2b, 2c) connected to said frame and configured to transmit data messages via a transmission medium (3),
• said transmission medium being configured to carry out the transmission of data messages between the electronic modules of said plurality of electronic modules,
wherein each electronic module of said plurality of electronic modules is a master node comprising a processing unit (4) configured to transmit at least one of said data messages to at least another electronic module of said plurality of electronic modules when a predetermined event occurs in the electronic module of said processing unit (4) and if said transmission medium is free for said processing unit.

2. Home automation system according to claim 1, wherein said processing unit is configured to determine whether said transmission medium is free and to access the latter when said transmission medium is free.

3. Home automation system according to claim 1 or 2, wherein said transmission medium comprises a single conductive line (15) for transmitting data messages between said electronic modules.

4. Home automation system according to one of the preceding claims, wherein said processing unit is configured for a two-way data communication, particularly in half-duplex mode.

5. Home automation system according to one of the preceding claims, wherein said processing unit is configured to transmit data messages in serial and/or asynchronous mode, preferably in asynchronous serial mode.

6. Home automation system according to one of the preceding claims, wherein at least one of said electronic modules, preferably each electronic module of said plurality of electronic modules, comprises at least one of:
• an input interface configured to acquire a command from a user and/or a data signal sent by an electronic device operationally connected to such an electronic module via an additional communication bus,
• a sensor configured to detect a physical quantity, and
• a sensor configured to detect objects in a surrounding area or immediately near such an electronic module.

7. Home automation system according to one of the preceding claims, wherein said processing unit is configured to transmit data messages in a broadcast mode.

8. Home automation system according to one of the preceding claims, wherein said processing unit implements a multiple access protocol to the transmission medium with data message collision detection.

9. Home automation system according to one of the preceding claims, wherein said processing unit comprises a receiving memory (24) arranged to store a data message received from the related electronic module, said processing unit being configured to determine whether the transmission medium is free based on the contents of said receiving memory.

10. Home automation system according to one of the preceding claims, wherein said processing unit comprises a receiving memory (24) and a transmission memory (25) arranged to store a data message received and, respectively, transmitted by the related electronic module, said processing unit being configured to detect a data message collision based on a comparison between said receiving memory and said transmission memory.

11. Home automation system according to one of the preceding claims, wherein said processing unit comprises a communication interface (21) configured to transmit and receive data messages, said communication interface being a universal asynchronous receiver-transmitter, UART, or a universal asynchronous and synchronous receiver-transmitter, USART.

12. Home automation system according to claim 11, wherein said communication interface comprises a Busy Flag field (30), said processing unit being configured to determine whether the transmission medium is free based on the contents of the Busy Flag field.

13. Home automation system according to claim 11 or 12, wherein said processing unit is configured to detect a data message collision if said communication interface detects a Framing Error.

14. Home automation system according to one of the preceding claims, wherein said frame is provided with said transmission medium.

15. Home automation system according to one of the preceding claims, wherein said electronic modules comprise respective terminals (20) for transmitting data messages, each terminal being arranged so as to come into contact with said transmission medium when the related electronic module is connected to said frame.

16. Home automation system according to one of claims 1 to 13, wherein said frame is preferably a DIN guide and wherein said electronic modules comprise respective terminals for transmitting data messages, said terminals being arranged in such a way that the terminal of a first electronic module contacts the terminal of a second electronic module when said first and second electronic modules are placed side by side and connected to said frame, the union of said terminals forming said transmission medium.

17. Home automation system according to one of the preceding claims, wherein said electronic modules comprise respective electrical contacts (18), each electrical contact being arranged so as to come into contact with a power supply line when the related electronic module is connected to said frame.

18. Home automation system according to one of the preceding claims, wherein said frame is provided with a power supply line (14) for energising said plurality of electronic modules.

19. Electronic module of a home automation system according to one of the preceding claims, wherein said home automation system comprises a connection device (5, 6) comprising at least one attachment element (5) and at least one attachment receiving element (6) for connecting said electronic modules to said frame, and wherein said electronic module and said frame comprise one said at least one attachment element and the other said at least one attachment receiving element.
